# EUROPÄISCHE PATENTSCHRIFT

(11) **EP 2 825 429 B1**
(45) Veröffentlichungstag und Bekanntmachung des Hinweises auf die Patenterteilung: **27.04.2016**
(21) Anmeldenummer: 13709897.6
(22) Anmeldetag: 14.03.2013
(51) Int. Cl.: B60T 7/12, B62B 5/04, B62B 9/08

(54) **BREMSEINRICHTUNG FÜR EIN RAD AN EINEM SCHIEBEWAGENGESTELL**
BRAKE DEVICE FOR A WHEEL ON A WHEEL-TO-CARRIAGE FRAME
DISPOSITIF DE FREINAGE POUR UNE ROUE AU NIVEAU D'UN CHÂSSIS DE CHARIOT ROULANT

(30) Priorität: 16.03.2012 DE 202012100949 U
(43) Veröffentlichungstag der Anmeldung: 21.01.2015
(73) Patentinhaber: Fleischmann, Michael, 96275 Marktzeuln (DE); Brunn, Hans-Jürgen, 96279 Weidhausen (DE)
(72) Erfinder: Fleischmann, Michael, 96275 Marktzeuln (DE); Brunn, Hans-Jürgen, 96279 Weidhausen (DE)
(74) Vertreter: Pröll, Jürgen
(86) Internationale Anmeldenummer: PCT/EP2013/055274
(87) Internationale Veröffentlichungsnummer: WO 2013/135835

(56) Entgegenhaltungen:
- EP-A2- 1 627 794
- DE-U1- 29 901 834
- US-A1- 2007 051 566
- US-A1- 2009 045 021

## Beschreibung

Die Erfindung betrifft eine Bremseinrichtung für mindestens ein Rad, das an einem Schiebewagengestell angeordnet ist, das mindestens aufweist einen Schiebegriff, einen Schiebebügel und/oder einen Bremsgriff, wobei die Bremseinrichtung beim Abheben der Hand oder der Hände der schiebenden Person von dem Schiebegriff, dem Schiebebügel oder dem Bremsgriff das Rad mittels eines mechanisch gekoppelten oder elektrisch von Sensoren oder mechanischen Schaltelementen an dem Schiebegriff, Schiebebügel oder an einem Bremsgriff gesteuerten Bremselementes bremst.

Aus der DE 10 2009 033 475 A1 ist eine Bremseinrichtung bekannt, die eine Sicherungsvorrichtung zum Verhindern einer unbefugten Inbetriebnahme eines Fahrzeuges aufweist, die mit mindestens einer Steuerung, mindestens einem Aktuator und mindestens zwei die Bewegung eines Fahrzeuges beeinflussenden Bauteilen zusammenwirkt. Mittels des Aktuators ist eine reversible Verbindung zwischen den die Bewegung des Fahrzeuges beeinflussenden Teilen hergestellt und/oder verhindert, wobei der Aktuator von der Steuerung bedienbar ist und die die Bewegung des Fahrzeuges beeinflussenden Bauteile vollständig oder teilweise in einem Gehäuse angeordnet sind. Ferner gibt die Schrift ein Verfahren zur Sicherung eines Fahrzeuges mittels einer Sicherungsvorrichtung und die Verwendung der Sicherheitsvorrichtung an. Der Aktuator der Sicherungseinrichtung wandelt Signale, beispielsweise elektrische, magnetische, thermische Signale oder magnetische Wellen in mechanische Bewegung um. Ferner können die die Bewegung des Fahrzeuges beeinflussenden Bauteile Teile einer Bremsvorrichtung, einer Lenkvorrichtung oder einer Kupplung sein. Die Bremsvorrichtung kann eine Scheiben- oder Bandbremse umfassen. Die Funktion der radnahen Sicherung wird über zwei Systeme realisiert. Das erste System nutzt das Prinzip des Formschlusses. Hierbei werden z. B. über den Zeitraum der Sicherung der Nabenkörper und die Achse formschlüssig verbunden. Über den Aktuator, der einen Servomotor enthält, wird ein die Bewegung des Fahrzeugs beeinflussendes Bauteil, z. B. eine Stange in eine Zahnscheibe an dem Rad, über eine Führung auf der Achse verschoben. Hierbei sind alle drei Bauteile direkt miteinander verbunden. Die Zahnscheibe verbindet die feststehende Achse mit dem losen Nabenkörper, wobei das Rad in Formschluss blockiert ist. Die Systemaktivierung erfolgt berührungslos über Transponder (z. B. ein RFID) mit einer Auslösereichweite von ca. 5 m, über Karten- oder Chiplesegeräte, Schlösser mit oder ohne Schlüssel und/oder Tastencodierung sowie Fingerabdruckscanner, etc. Eine automatische Sicherungsfunktion in Abhängigkeit von der Betätigung einer Bremseinrichtung und/oder des Rollvorganges eines Schiebewagengestells und damit verbundene Sicherungsfunktionen bei der Deaktivierung sind hier nicht vorgesehen.

Aus der DE 7241269 U ist eine automatische Blockiervorrichtung für Kinderwagen bekannt, mittels welcher eine aus Eile oder Gleichgültigkeit nicht betätigte Bremse wirksam wird und alleine durch Wegnehmen der Hand vom Schiebegriff ein Blockiergriff mit ausgelassen wird, wodurch völlig selbsttätig eine permanente Blockierung der Fahr- oder Schaukelbewegung des Kinderwagens eintritt. Am Schiebegriff befindet sich sowohl ein Bremsgriff als auch ein Blockiergriff, die miteinander eine Einheit darstellen. Eine weitere ebenso wichtige Sicherheitsmaßnahme wird dadurch erzielt, dass beim Eintreten der Blockierung ein daran angebautes Schloss dergestalt einschnappt oder einrastet, dass nur mittels eines Schlüssels dieses wieder gelöst und damit die gesamte Blockierung aufgehoben werden kann. Die Bremseinrichtung bildet mit dem Blockiersystem eine mechanische Einheit.

Aus der DE 10 2004 033 572 A1 ist ein Bremssystem für einen Transportwagen mit Elektroantriebsmotoren bekannt, bei dem an einem Schiebebügel Sensoren, insbesondere Kraftmesser, zur Ableitung von Steuersignalen aus den durch jede der beiden Hände einer Bedienperson auf den Schiebebügel ausgeübten Zug- oder Schubkräfte in die Energieversorgung der beiden Elektromotoren eine erste Schalteinrichtung integriert ist, welche wenigstens bei stillstehendem Wagen das Lösen einer Sicherheitsbremse bewirkt und/oder eine Energieversorgung beider Elektromotoren unterbricht, falls einer der am Schiebebügel angeordneten Sensoren keine Signale liefert. Ein Blockiersystem dieser Art ist ferner aus der US 5,794,639 A und der GB 2 455 529 A bekannt. Ein gleich wirkendes elektrisches Bremssystem ist ferner aus der CN 102120463 A bekannt.

Aus der US 2007/0051566 A1 ist ein Kinderwagengestell bekannt, das eine elektrisch arbeitende Bremseinrichtung aufweist, bei der das Bremselement von einem Aktuator bedient wird. Der Aktuator ist mit einer programmierbaren Steuerschaltung verbunden, die in Abhängigkeit von Signalen, die von Sensoren an dem Schiebegriff erzeugt werden, die Steuerung nach einem eingeschriebenen Programm bewirkt. Mit der Steuerschaltung ist ferner ein Radsensor verbunden, der die Bewegung des Rades detektiert. Die Programmierung stellt sicher, dass dann, wenn keine Signale von den Sensoren anliegen, jedoch eine Drehung der Räder festgestellt wird, der Aktuator der Bremse die Bremsung bewirkt. In einer Ausführung ist zusätzlich vorgesehen, dass ein unberechtigtes Lösen der Bremse nicht möglich ist und diese durch Eingabe eines Codes mittels einer Tastatur freigegeben wird, wodurch eine Diebstahlsicherung gewährleistet ist.

Aus der DE 299 01 834 U1 ist ein automatisches Kinderwagenbremssystem bekannt, bei dem ein Mechanismus die Räder des Kinderwagens blockiert sobald der Schiebegriff des Kinderwagens losgelassen wird. Das System kann mechanisch, hydraulisch oder elektromechanisch ausgelegt sein. In einer Ausgestaltungsform ist eine Zeitverzögerung vorgesehen, bei welcher die Bremsen des Kinderwagens erst nach einer bestimmten Zeit des Loslassens aktiviert werden. Eine gleich wirkende elektrische Bremseinrichtung ist aus der EP 1 627 794 A2 bekannt.

Aus der DE 10 2007 044 834 A1 ist ein Kinderwagen mit einem Fahrgestell bekannt, an dem eine Hinterachse mit Hinterrädern angeordnet ist, mit welchen eine Feststellbremse zusammenwirkt. Diese besteht im Wesentlichen aus einem an jedem Hinterrad vorgesehenen Rastkranz mit auf einem Teilkreis zueinander beabstandeten Rastausnehmungen. Zum Feststellen der Hinterräder ist eine Bremsstange mit einer Rastausnehmung an jedem Rastkranz in Eingriff bringbar. Die Bremsstangen sind hierzu an der Hinterachse axial verschiebbar gelagert.

Aus der DE 299 11 028 U1 ist eine Feststellbremse für ein Laufrad eines Fahrzeuges mit einer Schubstange bekannt, die mittels eines Nockens an einer Nockenwelle zwischen einer Arretier- und eine Freigabestelle axial verschieblich in dem Fahrgestell oder in einem Gehäuse mit mindestens einem Endabschnitt gelagert ist, wobei die Nockenwelle mittels eines Betätigungshebels verschwenkbar ist und sowohl in die Arretier- als auch in die Freigabestellung unter Federkraft in ihrer jeweiligen Stellung gehalten ist. Die Bedienung erfolgt beispielsweise über einen Bremsgriff, der am Schiebegriff des Fahrzeuges angebracht ist und über einen Bowdenzug, der auf den Betätigungshebel wirkt. Es kann aber auch eine Fußbedienung in Form eines Schwenkhebels an dem Gehäuse vorgesehen sein, der mittels des Fußes aus einer der Stellungen in die andere umlegbar ist.

Eine ähnliche Sicherheitsbremse für Kleinfahrzeuge, insbesondere Kinderwagen, die eine Bremseinrichtung mit einem Bremselement aufweisen, ist aus der DE 296 21 478 U1 bekannt. Auch hier wird gegen die Wirkung eines Federelementes ein Bremselement über einen Handhebel verschoben und tritt in einen Sperrkranz am Rad ein. Wenn der Hebel angezogen wird, tritt das Bremselement aus dem Sperrkranz aus und gibt das Kleinfahrzeug frei.

Aus der DE 20 2004 006 984 U1 ist ein Handbremsgriff für eine Bremseinrichtung an mindestens einem Rad eines Fahrgestells bekannt, der über einen Bowdenzug oder einen Seilzug mit der Bremseinrichtung und mit einer feststellbaren und wieder lösbaren Vorrichtung zum Arretieren in einer angezogenen Position ausgestattet ist. Die lösbare Vorrichtung besteht aus einem verschwenkbaren Bügel, der an dem feststehenden Teil oder an dem beweglichen Griffelement des Handbremsgriffes angelenkt und bei angezogenem Griffelement in den Zwischenraum zwischen diesem und dem feststehenden Teil schwenkbar ist. Hierzu und auch zum Lösen des Griffelementes durch Zurückschwenken des Bügels ist eine Zweihandbetätigung erforderlich.

Aus der DE 20 2009 009 310 U1 ist eine automatische Feststellbremse für geschobene Handfahrzeuge, wie Kinderwägen, bekannt, die eine Bremseinrichtung an einem Rad aufweisen und eine Auslöseeinheit, die in Verbindung mit einem Bremshebel vorgesehen ist, sowie einen Bowdenzug zur Verbindung zwischen dem Bremshebel und der Bremseinheit. Die Feststellbremse umfasst einen auslösbaren Federspeicher, der bei Bedienen der Auslöseeinheit wirksam wird und eine Verriegelung durch Eintritt eines Arretierungsbolzens in einen Lochkranz bewirkt.

Aus der DE 296 14 344 U1 ist ein Kinderwagen mit einem elektromotorischen Antrieb bekannt, der eine Achse oder mindestens ein Rad mit Freilauf angibt. Das angetriebene Rad ist mit einer Bremseinrichtung versehen, deren Aktivierung über zwei Kontrollleuchten angezeigt wird. Der Motor wird von einer Batterie, die über einen Schlüsselschalter einschaltbar ist, angetrieben. Wenn die Bremseinrichtung aktiviert ist, wird mittels eines Gebers ein Signal erzeugt, das das Einschalten des Motors verhindert, indem die Stromversorgung unterbrochen wird. Über die Art und Weise der Bremseinrichtung ist der Schrift nichts Näheres zu entnehmen.

Aus der DE 10 2008 050 946 A1 ist ein Bremssystem für ein Kleinfahrzeug, insbesondere einem Rollstuhl, einem Kinderwagen oder dergleichen, mit einem bewegbaren Rastbolzen bekannt, der bei Stillstand des Rades des Kleinfahrzeuges mit dem Rastbolzensperrelement zusammenwirkt, das eine Bolzenblockiereinrichtung aufweist, die im Fahrbetrieb die Bewegung des Rastbolzens in Richtung des Rastbolzensperrelementes blockiert und den Rastbolzen bei Stillstand des Kleinfahrzeuges freigibt, um die Blockierungen zu bewirken. Zur Bremsbetätigung sind ein Bedienelement und ein Übertragungsmittel vorgesehen, vorzugsweise ein Gestänge, ein Bowdenzug oder ein hydraulisches und/oder elektrisches System.

Aus der DE 100 56 746 A1 ist ein Kinder- oder Sportwagen mit einem tragenden Gestell, an dem die Radachsen mit Rädern und einem Schiebebügel angeordnet sind und welches außerdem einen Sitz- und/oder Liegeeinsatz enthält bzw. aufnehmen kann, bekannt. Der Wagen ist mit einer analog wirkenden Bremseinrichtung ausgestattet, deren Bremskraft mittels eines Fluids bis zum Rad übertragen wird. In einem der Räder kann ein elektrisch angetriebener Motor integriert sein. Weitere Funktionen, wie akustische Warneinrichtungen, Signaltonspeichergeräte etc., können von der vorgesehenen Stromquelle ebenfalls versorgt werden.

Aus der DE 93 00 884 U1 ist eine Passiv-Bremse für Kinderwagen bzw. Buggys bekannt, bei der wenigstens an einem der Räder des Kinderwagens eine Arretierung angeordnet ist, die in Richtung der arretierenden Stellung vorgespannt ist. An der Schiebestange ist eine Betätigungsvorrichtung zum Lösen der Arretierung angeordnet. Ferner ist ein Vermittlungselement vorgesehen, das die Arretierung und die Betätigungsvorrichtung miteinander verbindet. Als Vermittlungselement können ein Elektrokabel mit einem Schalter an der Betätigungsvorrichtung und eine Stromversorgung an der Arretierung vorgesehen sein. Mit dem Schalter bzw. dem Elektromagneten kann zusätzlich ein Akustikschalter verbunden sein, der bewirkt, dass in der nicht beaufschlagten Ruhestellung des Schalters der Elektromagnet nicht sofort stromlos geschaltet wird, sondern erst nach Auftreten eines Geräusches mit einer Lautstärke oberhalb des einstellbaren Schwellenwertes am Akustikschalter.

Ausgehend vom Stand der Technik liegt der Erfindung die Aufgabe zu Grunde, das Sicherungssystem für eine Bremseinrichtung derart weiterzuentwickeln, dass abhängig vom Benutzungszustand des Schiebewagengestells bei gleichzeitiger einfacher Handhabung eine erhöhte Sicherung gegen unbeabsichtigtes Wegrollen des Schiebewagengestells, z. B. auf einer abschüssigen Straße, auf einem abschüssigen Weg, auf einem Platz oder Hof, gegeben ist, wobei das Sicherungssystem völlig unabhängig von der Bremseinrichtung wirksam und auch bedienbar sein soll und gegebenenfalls die Bedienelemente für die Bremseinrichtung zum Auslösen und Aufheben wahlweise mit der Sicherungsfunktion verknüpfbar sind.

Gelöst wird die Aufgabe durch die im Anspruch 1 angegebene technische Lehre, wonach mindestens ein zusätzliches Brems-Blockierelement vorgesehen ist, das von einem elektrisch steuerbaren Aktuator in eine Blockier- und eine Freigabeposition verbringbar ist und auf die Bremseinrichtung einwirkt, wobei eine elektrische Steuerschaltung in Abhängigkeit von Steuersignalen, die von zusätzlichen Sensoren oder mechanischen Schaltelementen an dem Schiebegriff, dem Schiebebügel oder dem Bremsgriff beim Auflegen und Abheben mindestens einer Hand oder durch Auswertung der Betätigungszeit über eine definierte Betätigungszeitspanne der vorhandenen Sensoren oder mechanischen Schaltelemente für das Bremsen des Rades generiert werden, den Aktuator steuert und die Steuerschaltung mit einem elektronischen Sicherheitsschloss kombiniert ist, das nach dem Aktivieren des Aktuators die Steuerschaltung veranlasst, den Aktuator so lange in der Blockierposition zu belassen, bis durch Betätigung eines Freigabesensors oder -schalters oder Schlüsselschalters das elektronische Sicherheitsschloss ein Freigabesignal an die Steuerschaltung abgibt und den Aktuator deaktiviert, um das Rad freizugeben.

Durch das Blockierelement und die unabhängige Steuerung des bewegenden Aktuators unter Einbindung eines elektronischen Sicherheitsschlosses in die elektrische Steuerung ist eine Diebstahlsicherung auf einfache Weise realisierbar, beispielsweise durch den Schlüsselschalter oder Nummernschalter. Die Bedienung des Schiebewagengestells ohne die Blockierungsmöglichkeit ist ebenfalls möglich durch einfaches Ab- oder Ausschalten dieser Funktion, was ebenfalls über den Schlüsselschalter oder den Nummernschalter bewerkstelligt werden kann. Dazu ist es zweckmäßig, die Steuerschaltung mit einem Mikroprozessor zu bestücken, der entsprechend programmiert werden kann. Das System stellt ferner sicher, dass in bekannter Weise die Bremse beim Schieben des Kinderwagens oder beim Befahren einer abschüssigen Straße bedienbar ist und bei versehentlichem Loslassen des Schiebebügels oder -griffes automatisch eine Blockierung der Räder oder des Rades erfolgt, obwohl die Bremse nicht betätigt ist.

Das System stellt aber auch sicher, dass eine Blockierung gegeben ist, wenn durch einen Blockiercode oder durch eine Schlüsselstellung oder durch eine Fernbedienung die Steuerschaltung veranlasst wird, den Aktuator und mit ihm das Blockierelement in die Verriegelungsstellung zu verbringen. Das Blockierelement greift dabei direkt in ein Loch eines Lochkranzes oder einer Ausnehmung in einem Zahnkranz des Rades ein.

Vorteilhafte Weiterbildungen der erfindungsgemäß ausgebildeten Bremseinrichtung sind in den abhängigen Unteransprüchen im Detail angegeben.

Die Steuerung eines elektrisch steuerbaren Aktuators, der mit einer Bremseinrichtung zusammenwirkt, wie dies beispielsweise aus der DE 10 2009 033 475 A1 bekannt ist, kann gemäß der Erfindung über zusätzliche Bedienelemente oder durch die vorhandenen, für die normale Steuerung der Bremseinrichtung vorgesehenen Bedienelemente erfolgen. Im letzteren Fall wird die Belegungszeit der Sensoren oder Schalter, insbesondere an dem Schiebegriff oder Schiebebügel, nach dem Auflegen der Hand festgestellt und mit einem Zeitabschnitt verglichen. Werden z.B. 6 Sekunden überschritten, gibt die Steuerung das Blockierelement frei und der Aktuator bewirkt eine Bewegung des Blockierelementes in die Entriegelungsstellung. Der Aktuator wird in Abhängigkeit von Steuersignalen, die zusätzliche Sensoren oder mechanische Schaltelemente an dem Schiebegriff, dem Schiebebügel oder dem Bremsgriff beim Auflegen oder Abheben einer Hand generieren, aktiviert oder deaktiviert oder über die der normalen Bremse.

Wenn die Aktivierung erfolgt ist, sorgt eine Sicherungsschaltung dafür, dass die Steuerschaltung veranlasst, den Aktuator so lange in der Blockierposition zu belassen, bis durch Betätigung eines vorgesehenen Sicherheitsschlosssystems mittels eines Freigabesensors oder -schalters, eines Schlüsselschalters oder eines numerischen Schalters oder elektronischen Schlosses die Steuerung mittels eines Freigabesignals veranlasst wird, den Aktuator zu deaktivieren, um das Rad freizugeben.

Das Sicherheitsschlosssystem zur Steuerung der Sicherheitsschaltung und damit der Steuerschaltung ist gemäß einer weiteren Ausgestaltung der Erfindung derart einstellbar, dass die Deaktivierung des Aktuators über die Sensoren und Schaltelemente an dem Schiebegriff oder dem Schiebebügel bei erneutem Auflegen einer Hand oder beider Hände erfolgt. Es wird also in diesem Fall nicht nur die normale Bremse gesteuert, sondern zugleich werden auch die Steuersignale dazu verwendet, um den Aktuator zu deaktivieren, d. h. außer Kraft zu setzen, damit die mechanische oder elektrische Steuerung der Bremse erfolgen kann, zu welchem Zweck eine Voreinstellung des Sicherheitsschlosssystems vorgesehen ist. Wird beispielsweise ein Schlüsselschalter zur Steuerung des Sicherheitsschlosssystems an einem Holm des Schiebewagengestells angebracht, so kann der Schlüsselschalter beispielsweise in zwei Stellungen verbracht werden; in die eine Stellung "Aktuatorsicherung", bei der sich der Benutzer im Bereich des Kinderwagens aufhält, und in die Stellung "Diebstahlsicherung", in der er den Kinderwagen abstellt und der Schlüssel abziehbar ist.

Während des Schiebebetriebs kann zwischen den zwei Stellungen umgeschaltet werden. In der Stellung "Diebstahlsicherung" bewirken die von den Gebern an dem Schiebebügel oder der Schiebestange oder dem Sensor am Bremsgriff abgegebenen Steuerimpulse für die Bremse zusätzlich keine Deaktivierung des Aktuators, so dass die Bremswirkung voll erhalten bleibt, wenn die Person versucht, den Schiebewagen zu bewegen. Befindet sich hingegeben die Person in Reichweite des Schiebewagengestells, so kann der Schlüsselschalter in die erste Stellung verbracht werden und es ist auf einfache Weise eine Deaktivierung des Aktuators, der zur zusätzlichen Sicherung vorgesehen ist, gegeben bzw. kann er bei erneutem Auflegen der Hand auf den Schiebegriff oder auf den Bremsgriff über die vorhandenen Schalter wieder deaktiviert werden, wie beschrieben.

Anstelle eines Schlüsselschalters können selbstverständlich auch ein numerischer Schalter oder eine Sensorkombination, ein biometrischer Schalter (Fingerabdruckschalter) oder auch ein Lesegerät für einen RFID-Transponder hier eingesetzt werden, um die unterschiedlichen Betriebszustände des Sicherheitsschlosssystems zu realisieren. Auch kann eine Schaltfunktion vorgesehen sein, über die das Bedienelement deaktiviert wird.

In einer weiteren Ausgestaltung der Erfindung ist vorgesehen, dass das Sicherheitsschlosssystem zum Aktivieren des Aktuators direkt bedienbar ist. Dies ist beispielsweise angebracht, wenn der Schiebewagen, z.B. ein Kinderwagen, abgestellt wird und die normalen Bremselemente nicht bedient werden. Wenn darüber hinaus ein Fernbedienungsempfänger in dem Steuergerät integriert ist, kann die funktion auch hierüber gesteuert werden. Diese Fernsteuerung ist also unabhängig von der Berührung des Schiebebügels oder der Schiebevorrichtung oder des Bremshebels steuerbar, so dass der Aktuator auch direkt von der Steuereinrichtung in eine Verriegelungsposition verbracht werden kann, beispielsweise bei Ausfall des normalen Bremssystems, um das Fahrzeug gegen Diebstahl oder Wegrollen zu sichern, damit beispielsweise dann, wenn es sich bei dem Schiebewagengestell um ein Kinderwagengestell handelt, dieses nicht unbeabsichtigt auf einer abschüssigen Straße wegrollen kann. Das gleiche gilt auch beispielsweise für die Sicherung eines Schiebewagengestells in Form eines Rollstuhls.

Zur weiteren Erhöhung der Sicherheit und gegen unbeabsichtigtes Wegrollen eines Fahrgestells ist in weiterer Ausgestaltung der Erfindung vorgesehen, dass die elektrische Steuerschaltung mit einem Bewegungssensor oder einer Drehzahlerfassungseinrichtung an einem Rad gekoppelt ist, der bzw. die die Drehbewegung und/oder die Drehzahl des Rades des Schiebewagengestells erfasst und in Abhängigkeit von einer definierten Umdrehungszahl und/oder einer ermittelten Winkelgeschwindigkeit des Rades den Aktuator aktiviert. Ein Bewegungssensor oder eine Drehzahlerfassungseinrichtung lässt sich an einem Kinderwagen mit einer elektrischen Energieversorgung beispielsweise über Akkumulatoren oder Batterien auf einfache Weise realisieren, so dass die Aktivierung des Aktuators auch in Abhängigkeit einer Rollbewegung der Räder des Fahrgestells sofort wirksam werden kann, wenn z. B. die normale Bremse wirkungslos schaltet oder durch einen anderen Defekt nicht bedienbar ist.

Der Aktuator kann mit beliebig ausgeführten Bremseinrichtungen zusammenwirken, wie dies aus der zuvor zitierten Druckschrift DE 10 2009 033 475 A1 bekannt ist. Es empfiehlt sich jedoch dann, wenn zwei parallel angeordnete Vorder- oder Hinterräder am Fahrgestell vorgesehen sind, dass der Aktuator mit der Bremseinrichtung zusammenwirkt, die auf die zwei parallel angeordneten Vorder- oder Hinterräder wirkt. Dabei können die beiden Bremselemente von einer auf einer Achse angebrachten Steuereinrichtung gesteuert werden und der Aktuator in dem Gehäuse dieser Steuereinrichtung eingebracht sein. Die normale Bremseinstellung kann beispielsweise über einen sich an oder in dem Gehäuse befindlichen Schwenkhebel erfolgen, der beim Umlegen zwei Stangen nach außen schiebt, die in Löcher eines Lochkranzes des jeweiligen Rades zur Blockierung greifen. Damit diese mechanisch nicht mehr zurückgestellt werden können, z. B. durch Umlegen des Betätigungshebels, wird der Aktuator im Sinne der Erfindung wirksam.

Bei dem Aktuator kann es sich um einen mittels eines Magneten oder eines Motors betätigten Sperrschieber handeln, der in eine Blockierausnehmung in den Stangen des Bremselementes oder in das Getriebe in dem Gehäuse eingreift. Der Aktuator kann also in einer zentralen mechanischen Steuereinheit der Bremseinrichtung angeordnet sein und die hierüber mechanisch, elektrisch oder hydraulisch gesteuerten Bremselemente blockieren oder freigeben. Dabei ist die Ausgestaltung auch nicht auf eine besondere Bremsausführung beschränkt. So kann beispielsweise für das in einem zentralen Gehäuse eingebrachte Getriebe für das Verstellen der Sperrstangen, die als Bremselemente wirken, eine bowdenzuggesteuerte Mechanik vorgesehen sein, die über einen Bremshebel am Griff die Steuerung für die normale Bremsung bewirkt. In jedem Fall bewirkt die Aktuatorsteuerung zusätzlich eine erhöhte Sicherheit zum Einen gegen Diebstahl und zum andere gegen unbeabsichtigtes Wegrollen, je nachdem, wie das Sicherheitsschlosssystem programmiert ist, wie zuvor schon beschrieben.

Die Steuerschaltung, die über Kabel mit den Sensoren und Impulsgebern am Wagengestell einer Schiebestange oder eines Schiebegriffs verbunden ist, kann in einem Gehäuse an einem Holm des Schiebewagengestells angebracht sein, in welchem auch die Batterie oder ein Akkumulator zur Stromversorgung der elektrischen Steuerschaltung, der Sicherheitsschaltung und gegebenenfalls des elektronischen Sicherheitsschlosssystems, sowie für die damit verbundenen elektrischen Elemente integriert sind. Auch kann ein Ladegerät in dem Gehäuse mit integriert sein, so dass von einem Dynamometer, der mit einem Rad des Wagengestells gekoppelt ist, oder über eine photovoltaische Stromquelle geladen werden.

Soweit Sensoren für die Generierung der Steuerimpulse für das Steuergerät vorhanden sind, können dies kapazitive Sensoren, Widerstandssensoren oder magnetische Sensoren sein, die in Abhängigkeit der Annäherung bzw. des Auflegens einer Hand auf den Griff oder durch Betätigung eines Bremshebels die entsprechenden Signale generieren, um die erfindungsgemäße Steuerung zu veranlassen. Die Sensoren an einem Bremsgriff können auch durch Lichtsensoren realisiert sein.

Die Bedienelemente des elektronischen Sicherheitsschlosssystems, der Freigabesensor, der Schlüsselschalter oder der numerische Schalter oder das elektronische Schloss sollten an einer Stelle an einer Schiebestange des Schiebewagengestells oder an dem Gehäuse der Steuerschaltung zugänglich angebracht sein, damit dessen Bedienung für die verschiedenen Sicherheitssysteme auf einfache Weise möglich ist.

Der Aktuator kann auch mit dem Bremselement einer Scheiben- oder Bandbremse kombiniert sein und nach einem sanften Abbremsen durch die normale Bremseinrichtung eine Feststellung bewirken. Während Formschlussverbindungen immer dazu neigen, dass ein hartes Bremsen erfolgt, ist hierüber ein gedämpftes Abbremsen möglich, wobei der Bremszustand dann durch den Aktuator erhalten bleibt, wenn die Sicherungsfunktion ausgeübt werden soll. Die normale Abbremsung kann bereits auch die Wirkung der Feststellbremsung bei Stillstand des Wagengestells beinhalten, die Aktuatorsteuerung ist aber dennoch zusätzlich vorgesehen, um beispielsweise einen Diebstahl zu unterbinden. Der Aktuator kann auch unmittelbar auf einen Sperrbolzen wirken, der als Blockierelement vorgesehen ist und der mit mindestens einem Rad des Wagens gekoppelt ist und im Sperrzustand in ein Loch- oder Zahnrad des Rades eingreift. Der Aktuator kann durch Betätigung des elektronischen Schlosssystems durch Verschieben oder Verschwenken des Sperrbolzens das Rad wieder freigeben.

Eine solche Ausführung ist auch als Nachrüstsatz für bestehende Fahrgestelle auslegbar. Der Nachrüstsatz kann dabei eine Einheit bilden, die auf eine Achse oder einen Holm des Schiebewagengestells montierbar und mit dem Rad verbindbar ist. Ein solcher Nachrüstsatz ist grundsätzlich auch an einem Gehäuse anbringbar, in welchem das Getriebe für zwei gegenläufige Bremsstangen eingebracht ist und das mechanisch oder elektrisch bedienbar ist. Der Aktuator kann dabei in einem Aufsatzgehäuse untergebracht sein und das mechanische Kopplungsglied, beispielsweise ein Stößel, in das Getriebe durch eine Bohrung in der Gehäusewand des Getriebes hineinreichen. Auch eine solche Einheit ist als Nachrüstsatz bei entsprechender Anpassung an die mechanische Ausgestaltung des Getriebes innerhalb des Gehäuses einbringbar.

Der Aktuator kann aber auch auf einen Sperrbolzen wirken, der verhindert, dass eine mittels eines Handgriffes bedienbare Bremseinrichtung am Schiebewagengestell unbeabsichtigt in eine Freigabeposition verbringbar ist. Ein solcher Handgriff ist in der Regel mit einem Bowdenzug verbunden, der auf das mechanische Getriebe für die Bremselemente wirkt.

Grundsätzlich kann die Bremseinrichtung elektromotorisch, hydraulisch oder über Bowdenzüge direkt oder über Getriebe steuerbare Bremselemente aufweisen. Der Aktuator wirkt dabei auf ein Blockierelement oder blockiert die Drehbewegung des Elektromotors durch Unterbrechung der Stromzufuhr, um die Bremselemente in der Bremsstellung zu halten.

Die erfindungsgemäße Bremseinrichtung mit den Sicherheitsmaßnahmen der erfindungsgemäßen Steuerungen ist auf Gestelle, wie Kinder- oder Puppenwagengestelle, Rollstühle, Gehwagen, Rollatoren, Golfwagen, Gepäck- oder Einkaufswagen anwendbar. Sie ist durch die Trennung des Bremssystems und des Sicherungssystems einerseits und deren elektrische Kombination andererseits als Nachrüstsatz auch auf bestehende Bremssysteme adaptierbar.

## Patentansprüche

1. Bremseinrichtung für mindestens ein Rad, das an einem Schiebewagengestell angeordnet ist, das mindestens aufweist einen Schiebegriff, einen Schiebebügel und/oder einen Bremsgriff, wobei die Bremseinrichtung beim Abheben der Hand oder der Hände der schiebenden Person von dem Schiebegriff, dem Schiebebügel oder dem Bremsgriff das Rad mittels eines mechanisch gekoppelten oder elektrisch von Sensoren oder mechanischen Schaltelementen an dem Schiebegriff, Schiebebügel oder an einem Bremsgriff gesteuerten Bremselementes bremst, wobei mindestens ein zusätzliches Brems-Blockierelement, das von einem elektrisch steuerbaren Aktuator in eine Blockier- und eine Freigabeposition verbringbar ist und auf die Bremseinrichtung einwirkt, **dadurch gekennzeichnet, dass** eine elektrische Steuerschaltung in Abhängigkeit von Steuersignalen, die von zusätzlichen Sensoren oder mechanischen Schaltelementen an dem Schiebegriff, dem Schiebebügel oder dem Bremsgriff beim Auflegen und Abheben mindestens einer Hand oder durch Auswertung der Belegungszeit der vorhandenen Sensoren oder mechanischen Schaltelemente für das Bremsen des Rades über eine definierte Zeitspanne generiert werden, den Aktuator steuert und die Steuerschaltung mit einem elektronischen Sicherheitsschloss kombiniert ist, das nach dem Aktivieren des Aktuators die Steuerschaltung veranlasst, den Aktuator so lange in der Blockierposition zu belassen, bis durch Betätigung eines Freigabesensors oder -schalters oder Schlüsselschalters das elektronische Sicherheitsschloss ein Freigabesignal an die Steuerschaltung abgibt und den Aktuator deaktiviert, um das Rad freizugeben.

2. Bremseinrichtung nach Anspruch 1, **dadurch gekennzeichnet, dass** das elektronische Sicherheitsschloss zum Verbringen des Aktuators in die Blockierposition und zum Zurückstellen direkt durch Eingabe eines Stellbefehls bedienbar ist.

3. Bremseinrichtung nach Anspruch 1, **dadurch gekennzeichnet, dass** das zusätzliche Brems-Blockierelement direkt auf ein Rad des Schiebewagengestells wirkt.

4. Bremseinrichtung nach einem der vorhergehenden Ansprüche, **dadurch gekennzeichnet, dass** die elektrische Steuerschaltung mit einem Bewegungssensor oder einer Drehzahlerfassungseinrichtung an einem Rad gekoppelt ist, der bzw. die die Drehbewegung und/oder die Drehzahl des Rades des Schiebewagengestells erfasst und in Abhängigkeit von einer definierten Umdrehungszahl und/oder einer ermittelten Winkelgeschwindigkeit des Rades den Aktuator aktiviert.

5. Bremseinrichtung nach Anspruch 1, **dadurch gekennzeichnet, dass** das zusätzliche Brems-Blockierelement mit dem Aktuator in einer Steuereinheit der Bremseinrichtung angeordnet ist und die hierüber mechanisch oder elektrisch oder hydraulisch gesteuerten Bremselemente blockiert oder freigibt.

6. Bremseinrichtung nach Anspruch 1, **dadurch gekennzeichnet, dass** das Gehäuse der Steuerschaltung und des elektronischen Sicherheitsschlosses an einem Holm des Schiebewagengestells angebracht ist und die Batterie oder den Akkumulator zur Stromversorgung der elektrischen Steuerschaltung und die Sicherheitsschaltung und die damit elektrisch verbundenen Elemente beinhaltet.

7. Bremseinrichtung nach Anspruch 6, **dadurch gekennzeichnet, dass** der Akkumulator über ein Ladegerät mit Netzanschluss oder über einen am Schiebewagengestell vorgesehenen Dynamometer, der von einem Rad angetrieben wird, oder über angebrachte photovoltaische Stromversorgungseinrichtung ladbar ist.

8. Bremseinrichtung nach Anspruch 1, **dadurch gekennzeichnet, dass** der Sensor ein kapazitiver Sensor, ein Widerstandssensor oder ein magnetischer Sensor ist.

9. Bremseinrichtung nach Anspruch 1, **dadurch gekennzeichnet, dass** die Bedienelemente des elektronischen Sicherheitsschlosses, der Freigabesensor, der Schlüsselschalter oder der numerische Schalter oder das elektronische Schloss an einer Seite an einer Schiebestange des Schiebewagengestells oder an dem Gehäuse der Steuerschaltung zugänglich angebracht sind.

10. Bremseinrichtung nach Anspruch 3, **dadurch gekennzeichnet, dass** der Aktuator unmittelbar auf ein Blockierelement in Form eines Sperrbolzens wirkt, der in ein Zahnrad oder in ein Lochrad, das mit mindestens einem Rad des Wagens gekoppelt ist, im Sperrzustand eingreift, und dass der Aktuator durch Betätigen des elektronischen Sicherheitsschlosses durch Verschieben oder Verschwenken des Sperrbolzens das Rad wieder freigibt.

11. Bremseinrichtung nach Anspruch 3 oder 10, **dadurch gekennzeichnet, dass** die Einheit als Nachrüstsatz auf einer Achse oder an einem Holm des Schiebewagengestells montierbar und das Rad hiermit verbindbar ist.

12. Bremseinrichtung nach Anspruch 1 oder 5, **dadurch gekennzeichnet, dass** die Bremseinrichtung elektromotorisch, hydraulisch oder über Bowdenzüge direkt oder über Getriebe steuerbare Bremselemente aufweist und dass der Aktuator auf ein Blockierelement in der Bremseinrichtung mechanisch wirkt oder die Drehbewegung des Elektromotors durch Unterbrechung der Stromzufuhr verhindert.

13. Bremseinrichtung nach Anspruch 1, **dadurch gekennzeichnet, dass** das Schiebewagengestell ein Kinder- oder Puppenwagengestell, ein Rollstuhl, ein Gehwagen (Rollator), ein Golfwagen, ein Gepäck- oder ein Einkaufswagen ist.

## Claims

1. Brake device for at least one wheel, which is arranged at a push car frame comprising at least a push handle, a push yoke and/or a brake handle, wherein the brake device when the hand or hands of the person pushing is or are lifted off the push handle, the push yoke or the brake handle brakes the wheel by means of a mechanically coupled brake element or a brake element electrically controlled by sensors or mechanical switching elements at the push handle, push yoke or brake handle, wherein there is at least one additional brake blocking element, which can be brought by an electrically controllable actuator into a blocking position and a release position and which acts on the brake device, **characterised in that** an electrical control circuit controls the actuator in dependence on control signals which are generated by additional sensors or mechanical switching elements at the push handle, the push yoke or the brake handle when at least one hand is placed on an lifted off or by evaluation of the engagement time of the sensors which are present or mechanical switching elements for braking of the wheel over a defined time period and the control circuit is combined with an electronic security lock which after activation of the actuator causes the control circuit to leave the actuator in the blocking position until through actuation of a release sensor or release switch or key switch the electronic security lock delivers a release signal to the control circuit and deactivates the actuator so as to release the wheel.

2. Brake device according to claim 1, **characterised in that** the electronic security lock is directly operable, by input of a setting command, for bringing the actuator into the blocking position and for resetting.

3. Brake device according to claim 1, **characterised in that** the additional brake blocking element acts directly on a wheel of the push car frame.

4. Brake device according to any one of the preceding claims, **characterised in that** the electrical control circuit is coupled with a movement sensor or a rotational speed detection device at a wheel, which detects the rotational movement and/or the rotational speed of the wheel of the push car frame and activates the actuator in dependence on a defined rotational speed and/or a determined angular speed.

5. Brake device according to claim 1, **characterised in that** the additional brake blocking element together with the actuator is arranged in a control unit of the brake device and blocks or releases the thereby mechanically, electrically or hydraulically controlled brake elements.

6. Brake device according to claim 1, **characterised in that** the housing of the control circuit and of the electronic security lock is mounted on a post of the push car frame and contains the battery or the accumulator for power supply of the electrical control circuit and the safety circuit and the elements electrically connected therewith.

7. Brake device according to claims 6, **characterised in that** the accumulator is chargeable by way of charging apparatus with a mains connection or by way of a dynamo, which is provided at the push car frame and which is driven by a wheel, or by way of an attached photovoltaic power supply device.

8. Brake device according to claim 1, **characterised in that** the sensor is a capacitive sensor, a resistance sensor or a magnetic sensor.

9. Brake device according to claim 1, **characterised in that** the operating elements of the electronic security lock, the release sensor, the key switch or the numerical switch or the electronic lock are mounted to be accessible at a side at a push rod of the push car frame or at the housing of the control circuit.

10. Brake device according to claim 3, **characterised in that** the actuator directly acts on a blocking element in the form of a locking pin, which in the locking state engages in a gearwheel or an apertured wheel coupled with at least one wheel of the car, and that through actuation of the electronic security lock the actuator releases the wheel again by displacement or pivotation of the locking pin.

11. Brake device according to claim 3 or 10, **characterised in that** the unit is mountable as a retrofit set on an axle or at a post of the push car frame and the wheel is cannectible therewith.

12. Brake device according to claim 1 or 5, **characterised in that** the brake device comprises brake elements controllable by electric motor or hydraulically or by way of Bowden pulls directly or via transmissions and that the actuator mechanically acts on a blocking element in the brake device or prevents rotational movement of the electric motor by interrupting the power feed.

13. Brake device according to claim 1, **characterised in that** the push car frame is a child or doll's pram frame, a wheelchair, a walking frame (rollator), a golf trolley, a baggage trolley or a shopping trolley.

## Revendications

1. Dispositif de freinage pour au moins une roue disposée contre un châssis de chariot poussé présentant au moins une poignée de poussée, un arceau de poussée et/ou une manette de frein, le dispositif de freinage freinant la roue en cas de retrait de la main ou des mains de la personne poussante à l'écart de la poignée de poussée, de l'arceau de poussée ou de la manette de frein, au moyen d'un élément de freinage couplé mécaniquement ou électriquement commandé par des capteurs ou des éléments de commutation mécaniques sur la poignée de poussée, l'arceau de poussée ou sur une manette de frein, au moins un élément de blocage - de freinage supplémentaire pouvant être mis dans une position de blocage et une position de déblocage par un actionneur à commande électrique et agit sur le dispositif de freinage, **caractérisé en ce qu'**en fonction de signaux de commande générés par des capteurs ou des éléments de commutation mécaniques additionnels sur la poignée de poussée, l'arceau de poussée ou la manette de frein lors de l'application et du retrait d'au moins une main, ou par évaluation du temps d'occupation des capteurs ou éléments de commutation existants pour le freinage de la roue pendant un intervalle temporel défini, un circuit électrique de commande commande l'actionneur et **en ce que** le circuit de commande est combiné à une serrure de sécurité électronique, laquelle commande après activation de l'actionneur le maintien de l'actionneur en position de blocage par le circuit de commande, jusqu'à ce qu'un signal de déblocage vers le circuit de commande soit émis par la serrure de sécurité électronique suite à l'activation d'un capteur, d'un commutateur de déblocage ou d'un commutateur à clé, et désactive l'actionneur pour débloquer la roue.

2. Dispositif de freinage selon la revendication 1, **caractérisé en ce que**, pour mettre l'actionneur en position de blocage et pour une réinitialisation, la serrure de sécurité électronique peut être commandée directement par saisie d'une instruction de réglage.

3. Dispositif de freinage selon la revendication 1, **caractérisé en ce que** l'élément de blocage - de freinage supplémentaire agit directement sur une roue du châssis de chariot poussé.

4. Dispositif de freinage selon l'une des revendications précédentes, **caractérisé en ce que** le circuit électrique de commande est couplé avec un capteur de mouvement ou un dispositif de saisie de vitesse de rotation sur une roue, lequel capte la rotation et/ou la vitesse de la roue du châssis de chariot poussé et active l'actionneur en fonction d'une vitesse de rotation définie et/ou d'une vitesse angulaire déterminée de la roue.

5. Dispositif de freinage selon la revendication 1, **caractérisé en ce que** l'élément de blocage - de freinage supplémentaire est disposé avec l'actionneur dans une unité de commande du dispositif de freinage, et bloque ou débloque les éléments de freinage commandés mécaniquement, électriquement ou hydrauliquement au moyen de celle-ci.

6. Dispositif de freinage selon la revendication 1, **caractérisé en ce que** le boîtier du circuit de commande et de la serrure de sécurité électronique est appliqué contre un longeron du châssis de chariot poussé et contient la batterie ou l'accumulateur pour l'alimentation en courant du circuit électrique de commande, ainsi que le circuit de sécurité et les éléments qui lui sont électriquement connectés.

7. Dispositif de freinage selon la revendication 6, **caractérisé en ce que** l'accumulateur peut être chargé au moyen d'un chargeur avec franchement au secteur ou par un dynamomètre prévu sur le châssis de chariot poussé et entraîné par une roue, ou peut être chargé au moyen d'un dispositif d'alimentation photovoltaïque.

8. Dispositif de freinage selon la revendication 1, **caractérisé en ce que** le capteur est un capteur capacitif, une capteur de résistance ou un capteur magnétique.

9. Dispositif de freinage selon la revendication 1, **caractérisé en ce que** les éléments de commande de la serrure de sécurité électronique, le capteur de déblocage, le commutateur à clé ou le commutateur numérique ou la serrure électronique sont appliqués de manière accessible d'un côté contre une barre coulissante du châssis de chariot poussé ou contre le boîtier du circuit de commande.

10. Dispositif de freinage selon la revendication 3, **caractérisé en ce que** l'actionneur agit directement sur un élément de blocage ayant la forme d'une goupille de blocage et qui en état de blocage s'engrène dans une roue dentée ou dans une roue perforée accouplée à au moins une roue du fauteuil, et **en ce que** l'actionneur re-débloque la roue par déplacement ou pivotement de la goupille de blocage en actionnant la serrure de sécurité électronique.

11. Dispositif de freinage selon la revendication 3 ou 10, **caractérisé en ce que** l'unité peut être montée comme kit d'extension sur un essieu ou sur un châssis du chariot poussé, et **en ce que** la roue peut lui être raccordée.

12. Dispositif de freinage selon la revendication 1 ou 5, **caractérisé en ce que** ledit dispositif de freinage comprend des éléments de freinage à commande par moteur électrique, hydraulique ou par câbles Bowden, directe ou via un engrenage, et **en ce que** l'actionneur agit mécaniquement sur un élément de blocage dans le dispositif de freinage ou empêche la rotation du moteur électrique par interruption de l'alimentation en courant.

13. Dispositif de freinage selon la revendication 1, **caractérisé en ce que** le châssis de chariot poussé est un châssis de poussette ou de poussette pour poupée, un fauteuil roulant, un déambulateur, un chariot de golf, un chariot à bagages ou un caddie.
